# EUROPEAN PATENT APPLICATION

(11) **EP 4 561 258 A1**
(43) Date of publication of application: **28.05.2025**
(21) Application number: 22951469.0
(22) Date of filing: 19.07.2022
(51) Int. Cl.: H04W 88/02

(54) **RESTRICTION INFORMATION DETERMINATION METHOD/APPARATUS/DEVICE, AND STORAGE MEDIUM**

(71) Applicant: Beijing Xiaomi Mobile Software Co., Ltd., Beijing 100085 (CN)
(72) Inventor: CHEN, Dong, Beijing 100085 (CN)
(74) Representative: Gunzelmann, Rainer
(86) International application number: PCT/CN2022/106588
(87) International publication number: WO 2024/016191

(57) **Abstract**

The present disclosure belongs to the technical field of communications. Provided are a restriction information determination method/apparatus/device, and a storage medium. The restriction information determination method comprises: a base station receiving restriction information, which is sent by a core network device and corresponds to a terminal device, wherein the restriction information is used for indicating the restricted use of at least one type of sensing network by the terminal device. It can be seen therefrom that an implementation method for a sensing network to access a core network and for a terminal device to access a sensing network is provided in the present disclosure, such that a terminal device can access both a sensing network and a communication network using the method of the present disclosure, and since the core network can support the access of the sensing network, the two networks can successfully interact with each other by means of the core network, thereby ensuring effective integration of the sensing network and the communication network.

## Description

### TECHNICAL FIELD

The disclosure relates to a field of communication technology, in particular to a method, an apparatus, and a device for determining restriction information and a storage medium.

### BACKGROUND

In a wireless communication system, a sensing and communication network may achieve sensing and detection functions on the basis of communication, and therefore will become one of the core technologies of future communications. The sensing and communication network is specifically formed by integrating a sensing network and a communication network.

In related art, an optional integration method of the sensing network and the communication network is that: the sensing network and the communication network each perform their own duties (that is, the communication network provides a communication service for a terminal device, and the sensing network provides a sensing capability for the terminal device), and the two networks interact through a core network device. However, there is currently a lack of a method for realizing access of the sensing network to the core network and access of the terminal device to the sensing network.

### SUMMARY

The present disclosure provides a method, an apparatus, and a device for determining restriction information and a storage medium, capable of realizing access of a sensing network to a core network and access of a terminal device to the sensing network.

In a first aspect, embodiments of the present disclosure provide a method for determining restriction information. The method is performed by a base station and includes:

receiving restriction information corresponding to a terminal device sent by a core network device, in which, the restriction information indicates restricted use of the terminal device for at least one type of sensing network.

In the present disclosure, the method for determining restriction information is provided. The base station may receive the restriction information corresponding to the terminal device sent by the core network device, in which, the restriction information indicates the restricted use of the terminal device for the at least one type of sensing network. In the method of the present disclosure, with adding the restricted use of the terminal device for the at least one type of sensing network to the restriction information, the core network may support access of the sensing network. In addition, after receiving the restriction information, the base station may perform a mobility operation on the terminal device based on the restriction information, that is, determine whether the terminal device can access or hand over to the sensing network to enjoy a sensing service based on the restriction information. It can be seen that the present dis closure provides a method for realizing access of the sensing network to the core network and access of the terminal device to the sensing network. Based on this, the terminal device may access to the sensing network by using the method of the present disclosure. Moreover, the terminal device may also access to a communication network, and since the core network may support the access of the sensing network, the two networks may successfully interact through the core network, thus ensuring effective integration of the sensing network and the communication network.

Optionally, in an embodiment of the present disclosure, the restriction information includes at least one of:
radio access type (RAT) restriction information;
RAT information; or
extended RAT restriction information.

Optionally, in an embodiment of the present disclosure, the RAT restriction information is applied to a single connectivity scenario of the terminal device;
the RAT restriction information includes a bitmap, and each bit position in the bitmap corresponds to one type of sensing network, a bit value carried by the bit position indicates restricted use of the terminal device for a type of sensing network corresponding to the bit position;
in which, in a case that the bit value carried by the bit position is a first value, the bit value indicates that the type of sensing network corresponding to the bit position is restricted for the terminal device;
in a case that the bit value carried by the bit position is a second value, the bit value indicates that the type of sensing network corresponding to the bit position is not restricted for the terminal device.

Optionally, in an embodiment of the present disclosure, the RAT information includes at least one type of sensing network that is not restricted for the terminal device.

Optionally, in an embodiment of the present disclosure, the extended RAT restriction information is applied to a dual connectivity scenario of the terminal device; the extended RAT restriction information includes a primary RAT restriction, the primary RAT restriction includes a bitmap, and each bit position in the bitmap corresponds to one type of sensing network, a bit value carried by the bit position indicates restricted use of the terminal device for a type of sensing network corresponding to the bit position;
in which, in a case that the bit value carried by the bit position is a first value, the bit value indicates that the type of sensing network corresponding to the bit position is restricted for the terminal device;
in a case that the bit value carried by the bit position is a second value, the bit value indicates that the type of sensing network corresponding to the bit position is not restricted for the terminal device.

Optionally, in an embodiment of the present disclosure, receiving the restriction information corresponding to the terminal device sent by the core network device includes at least one of:
receiving the restriction information corresponding to the terminal device sent by the core network device through an initial context setup request message;
receiving the restriction information corresponding to the terminal device sent by the core network device through a handover request message;
receiving the restriction information corresponding to the terminal device sent by the core network device through a downlink non-access stratum (NAS) transmission message.

Optionally, in an embodiment of the present disclosure, the method further includes:
performing a mobility operation towards the terminal device based on the restriction information.

Optionally, in an embodiment of the present disclosure, in response to the restriction information including the RAT restriction information and the extended RAT restriction information,
performing the mobility operation towards the terminal device based on the restriction information comprises: performing the mobility operation towards the terminal device based on the extended RAT restriction information.

Optionally, in an embodiment of the present disclosure, the mobility operation includes at least one of:
in a case of the terminal device performing base station handover, determining whether hand over to a target base station is allowed for the terminal device based on restricted use of the terminal device for a type of sensing network accessed by the target base station;
in a case of the terminal device accessing a base station, determining whether the terminal device is allowed to access the base station based on restricted use of the terminal device for a type of sensing network accessed by the base station;
during a dual connectivity operation, selecting a secondary cell group (SCG) applicable for the terminal device based on the restriction information, in which, a type of sensing network accessed by a base station corresponding to the SCG applicable for the terminal device is not restricted for the terminal device; or
assigning a radio access network notification area (RNA) applicable for the terminal device to the terminal device, in which a type of sensing network accessed by a base station corresponding to the RNA applicable for the terminal device is not restricted for the terminal device.

In a second aspect, embodiments of the present disclosure provide a method for determining restriction information. The method is performed by a core network device and includes:
acquiring restriction information corresponding to a terminal device from unified data management (UDM), in which, the restriction information indicates restricted use of the terminal device for at least one type of sensing network; and
sending the restriction information corresponding to the terminal device to a base station.

Optionally, in an embodiment of the present disclosure, the restriction information includes at least one of:
radio access type (RAT) restriction information;
RAT information; or
extended RAT restriction information.

Optionally, in an embodiment of the present disclosure, the RAT restriction information is applied to a single connectivity scenario of the terminal device;
the RAT restriction information includes a bitmap, and each bit position in the bitmap corresponds to one type of sensing network, a bit value carried by the bit position indicates restricted use of the terminal device for a type of sensing network corresponding to the bit position;
in which, in a case that the bit value carried by the bit position is a first value, the bit value indicates that the type of sensing network corresponding to the bit position is restricted for the terminal device;
in a case that the bit value carried by the bit position is a second value, the bit value indicates that the type of sensing network corresponding to the bit position is not restricted for the terminal device.

Optionally, in an embodiment of the present disclosure, the RAT information includes at least one type of sensing network that is not restricted for the terminal device.

Optionally, in an embodiment of the present disclosure, the extended RAT restriction information is applied to a dual connectivity scenario of the terminal device; the extended RAT restriction information includes a primary RAT restriction, the primary RAT restriction includes a bitmap, and each bit position in the bitmap corresponds to one type of sensing network, a bit value carried by the bit position indicates restricted use of the terminal device for a type of sensing network corresponding to the bit position;
in which, in a case that the bit value carried by the bit position is a first value, the bit value indicates that the type of sensing network corresponding to the bit position is restricted for the terminal device;
in a case that the bit value carried by the bit position is a second value, the bit value indicates that the type of sensing network corresponding to the bit position is not restricted for the terminal device.

Optionally, in an embodiment of the present disclosure, sending the restriction information corresponding to the terminal device to the base station includes at least one of:
sending the restriction information corresponding to the terminal device to the base station through an initial context setup request message;
sending the restriction information corresponding to the terminal device to the base station through a handover request message; or
sending the restriction information corresponding to the terminal device to the base station through a downlink non-access stratum (NAS) transmission message.

In a third aspect, embodiments of the disclosure provide a communication device. The communication device is configured in a base station, and includes:
a transceiver module, configured to receive restriction information corresponding to a terminal device sent by a core network device, in which the restriction information indicates restricted use of the terminal device for at least one type of sensing network.

In a fourth aspect, embodiments of the present disclosure provide a communication device. The communication device is configured in a core network device, and includes:
a transceiver module, configured to acquire restriction information corresponding to a terminal device from unified data management (UDM), in which the restriction information indicates restricted use of the terminal device for at least one type of sensing network; and
the transceiver module is further configured to send the restriction information corresponding to the terminal device to a base station.

In a fifth aspect, embodiments of the disclosure provide a communication device. The communication device includes: a processor. When the processor calls a computer program stored in a memory, the method described in the first aspect above is implemented.

In a sixth aspect, embodiments of the disclosure provide a communication device. The communication device includes: a processor. When the processor calls a computer program stored in a memory, the method described in the second aspect above is implemented.

In a seventh aspect, embodiments of the disclosure provide a communication device. The communication device includes: a processor and a memory having a computer program stored thereon. The processor is configured to execute the computer program stored in the memory, causing the communication device to execute the method described in the first aspect above.

In an eighth aspect, embodiments of the disclosure provide a communication device. The communication device includes: a processor and a memory having a computer program stored thereon. The processor is configured to execute the computer program stored in the memory, causing the communication device to execute the method described in the second aspect above.

In a ninth aspect, embodiments of the disclosure provide a communication device. The communication device includes: a processor and an interface circuit. The interface circuit is configured to receive code instructions and transmit the code instructions to the processor. The processor is configured to run the code instructions to cause the device to perform the method described in the first aspect above.

In a tenth aspect, embodiments of the disclosure provide a communication device. The communication device includes: a processor and an interface circuit. The interface circuit is configured to receive code instructions and transmit the code instructions to the processor. The processor is configured to run the code instructions to cause the device to perform the method described in the second aspect above.

In an eleventh aspect, embodiments of the disclosure provide a communication system. The system includes the communication device of the third aspect and the communication device of the fourth aspect; or the system includes the communication device of the fifth aspect and the communication device of the sixth aspect; or the system includes the communication device of the seventh aspect and the communication device of the eighth aspect; or the system includes the communication device of the ninth aspect and the communication device of the tenth aspect.

In a twelfth aspect of embodiments of the disclosure, a computer-readable storage medium is provided. The computer-readable storage medium is configured to store instructions used by the above network device. The instructions, when executed, cause the network device to implement the method of any one aspect of the first aspect to the second aspect.

In a thirteenth aspect of the disclosure, a computer program product including a computer program is provided. The computer program, when run by a computer, causes the computer to implement the method of any one aspect of the first aspect to the second aspect.

In a fourteenth aspect of the disclosure, a chip system is provided. The chip system includes at least one processor and an interface for supporting the network device in realizing functions involved in the method of any one aspect of the first aspect to the second aspect, e.g., determining or processing at least one of data or information involved in the method described above. In a possible design, the chip system further includes a memory. The memory is configured to store necessary computer programs and data of the network device. The chip system may consist of chips or may include a chip and other discrete devices.

In a fifteenth aspect of the disclosure, a computer program is provided. The computer program, when running on a computer, causes the computer to implement the method of any one aspect of the first aspect to the second aspect.

### BRIEF DESCRIPTION OF THE DRAWINGS

The above and/or additional aspects and advantages of the present disclosure will become apparent and readily understood from the following description of embodiments in combination with the accompanying drawings, in which:
FIG. 1 is a structural diagram of a communication system provided by an embodiment of the disclosure.
FIG. 2 is a flowchart of a method for determining restriction information provided by another embodiment of the disclosure.
FIG. 3 is a flowchart of a method for determining restriction information provided by yet another embodiment of the disclosure.
FIG. 4 is a flowchart of a method for determining restriction information provided by still yet another embodiment of the disclosure.
FIG. 5 is a flowchart of a method for determining restriction information provided by another embodiment of the disclosure.
FIG. 6 is a flowchart of a method for determining restriction information provided by yet another embodiment of the disclosure.
FIG. 7 is a flowchart of a method for determining restriction information provided by still yet another embodiment of the disclosure.
FIG. 8 is a flowchart of a method for determining restriction information provided by an embodiment of the disclosure.
FIG. 9 is a flowchart of a method for determining restriction information provided by another embodiment of the disclosure.
FIG. 10 is a flowchart of a method for determining restriction information provided by still another embodiment of the disclosure.
FIG. 11 is a flowchart of a method for determining restriction information provided by an embodiment of the disclosure.
FIG. 12 is a flowchart of a method for determining restriction information provided by another embodiment of the disclosure.
FIG. 13 is a flowchart of a method for determining restriction information provided by still another embodiment of the disclosure.
FIG. 14 is a flowchart of a method for determining restriction information provided by another embodiment of the disclosure.
FIG. 15 is a flowchart of a method for determining restriction information provided by still another embodiment of the disclosure.
FIG. 16 is a structural diagram of a communication device provided by an embodiment of the disclosure.
FIG. 17 is a structural diagram of a communication device provided by another embodiment of the disclosure.
FIG. 18 is a block diagram of a user equipment provided by an embodiment of the disclosure.
FIG. 19 is a block diagram of a network side device provided by another embodiment of the disclosure.

### DETAILED DESCRIPTION

Embodiments will be described in detail herein, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with embodiments of the disclosure. Instead, they are merely examples of apparatuses and methods consistent with aspects related to the disclosure as recited in the appended claims.

The terms used in embodiments of the present disclosure are only for the purpose of describing specific embodiments, and are not intended to limit embodiments of the present disclosure. The singular forms "a" and "the" used in embodiments of the present disclosure and the appended claims are also intended to include plural forms unless the context clearly indicates otherwise. It is also understood that the term "and/or" as used herein refers to and includes any and all possible combinations of one or more of associated listed items.

It should be understood that, although the terms first, second, third, etc. may be used in embodiments of the present disclosure to describe various information, such information shall not be limited to these terms. These terms are only used to distinguish the same category of information. For example, subject to the scope of embodiments of the present disclosure, first information may also be referred to as second information, and similarly, second information may also be referred to as first information. It depends on the context. For example, the word "if" as used herein may be interpreted as "upon" or "when" or "in response to determining".

Embodiments of the present disclosure are described in detail below. Examples of the embodiments are shown in the accompanying drawing, in which the same or similar references indicate the same or similar elements throughout. Embodiments described herein with reference to drawings are examples, serve to explain the present disclosure, and are not construed to limit embodiments of the present disclosure.

To facilitate understanding, terms involved in the present disclosure are introduced first.

### 1. 6th generation mobile communication technology (6th generation mobile networks, 6G)

The 6G network is a fully connectivity world integrating terrestrial wireless and satellite communications. By integrating the satellite communications into 6G mobile communications, seamless global coverage is achieved, and network signals can reach any remote village. In addition, with a joint support of a global satellite positioning system, a telecommunications satellite system, an earth image satellite system and a 6G terrestrial network, a ground to air full coverage network can also help humans predict weather and quickly respond to natural disasters, etc.

### 2. Access and mobility management function (AMF)

The AMF performs registration, connectivity, reachability, and mobility management. The AMF provides a session management message transmission channel for a terminal device and a session management function (SMF) network element, and provides verification and authentication functions for a terminal device during accessing. The AMF is an access point for the terminal device and a wireless core network control plane.

### 3. Unified Data Management (UDM)

The UDM is used for management of user identification, subscription data, authentication data, and user service network element registration management.

Various network elements/functions involved in embodiments of the present disclosure may be either an independent hardware device or a function implemented by computer codes within the hardware device, which is not limited in embodiments of the present disclosure.

In order to better understand a method for determining transmission configuration indication status disclosed in an embodiment of the present disclosure, a communication system for which an embodiment of the present disclosure is applicable is first described below.

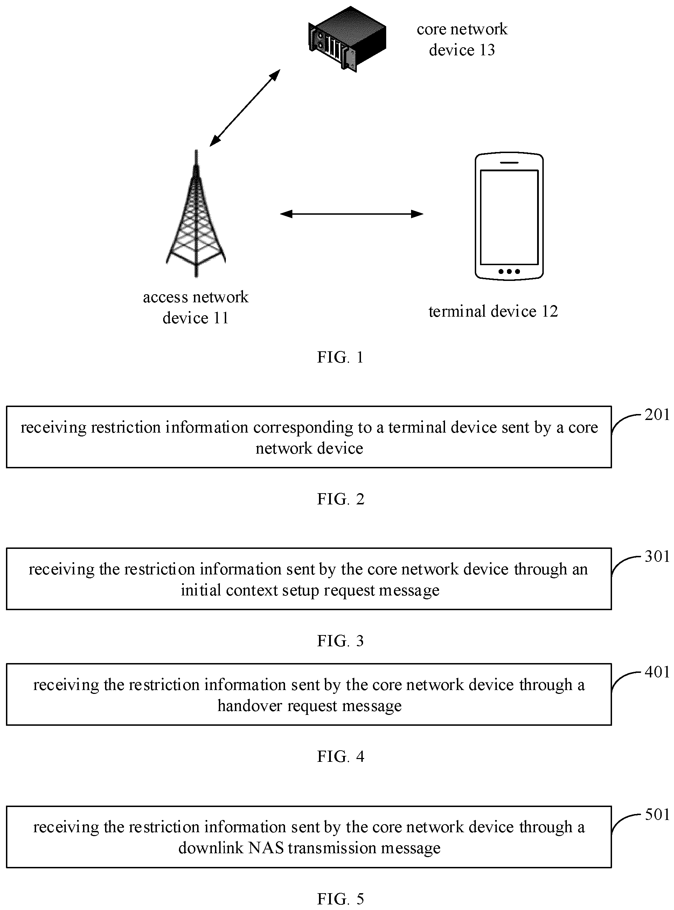

Please refer to FIG. 1, FIG. 1 is a structural diagram of a communication system provided by an embodiment of the disclosure. The communication system may include, but is not limited to, one network device and one terminal device. The number and the form of devices illustrated in FIG. 1 are only for examples and do not constitute a limitation on the embodiments of the disclosure. The communication system may include two or more network devices and two or more terminal devices in practical applications. The communication system illustrated in FIG. 1 may include, for example, a network device 11, a terminal device 12 and a core network device 13.

It is noteworthy that the technical solutions of the embodiments of the disclosure can be applied to various communication systems, such as, a long term evolution (LTE) system, a 5th generation (5G) mobile communication system, a 5G NR (new radio) system, or other future new mobile communication systems, etc.

The network device 11 in embodiments of the disclosure is an entity on a network side for transmitting or receiving signals. For example, the network device 11 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in the embodiments of the disclosure. The network device according to embodiments of the disclosure may be composed of a central unit (CU) and distributed units (DUs). The CU may also be referred to as a control unit. The use of CU-DU structure allows to divide a protocol layer of the network device, such as a base station, such that some of the protocol layer functions are placed in the CU for centralized control, and some or all of the remaining protocol layer functions are distributed in the DUs, and the DUs are centrally controlled by the CU.

The core network device 13 is a device provided in core network. Main functions of the core network device 13 include providing user connections, managing users, and carrying services, and the core network device 13, served as a bearer network, provides an interface to an external network. For example, the core network device in the 5G NR system may include an access and mobility management function (AMF) network element, a user plane function (UPF) network element and a session management function (SMF) network element, etc.

For example, the core network device 13 in an embodiment of the present application may include a location management function network element. Optionally, the location management function network element includes a location server. The location server may be implemented as any of: an LMF (location management function) network element, an E-SMLC (enhanced serving mobile location center), an SUPL (secure user plane location), an SUPL SLP (SUPL location platform).

In an example, the access network device 12 and the core network device 13 communicate with each other through a certain air interface technology, such as an NG interface in the 5G NR system. The access network device 12 and the terminal device 11 communicate with each other through a certain air interface technology, such as a Uu interface.

The terminal device 12 in embodiments of the disclosure is an entity on a user side for receiving or transmitting signals, such as a cellular phone. The terminal device may also be referred to as a terminal, a user equipment (UE), a mobile station (MS), a mobile terminal (MT), and the like. The terminal device can be a car with communication functions, a smart car, a mobile phone, a wearable device, a Pad, a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The specific technology and specific device form adopted by the terminal device are not limited in embodiments of the present disclosure.

It is understandable that the communication system described in embodiments of the present disclosure is intended to clearly illustrate the technical solutions according to embodiments of the present disclosure, and does not constitute a limitation on the technical solutions according to embodiments of the present disclosure. It is understandable by those skilled in the art that as system architectures evolve and new business scenarios emerge, the technical solutions according to embodiments of the disclosure are also applicable to similar technical problems.

A method, an apparatus, and a device for determining restriction information and a storage medium provided by embodiments of the present disclosure will be described in detail below with reference to the accompanying drawings.

FIG. 2 is a flowchart of a method for determining restriction information provided by an embodiment of the disclosure. The method is performed by a base station. As illustrated in FIG. 2, the method may include a following step.

At step 201, restriction information corresponding to a terminal device sent by a core network device is received.

In an embodiment of the present disclosure, in response to the base station accessing a sensing network, the base station and the core network device are connected through an N2 interface defined by 3GPP (the 3rd Generation Partner Project), thereby ensuring network compatibility. The core network device may be an AMF (access and mobility management function).

In an embodiment of the present disclosure, the above restriction information may be used to indicate restricted use of the terminal device for at least one type of sensing network, that is, to indicate whether the at least one type of sensing network is restricted for the terminal device. In an embodiment of the present disclosure, the at least one type of sensing network may include a video sensor network and a speed and acceleration sensor network.

In an embodiment of the present disclosure, the restriction information may include at least one of:
radio access type (RAT) restriction information;
RAT information; or
extended RAT restriction information.

Specifically, in an embodiment of the present disclosure, the RAT restriction information is applied to a single connectivity scenario of the terminal device (that is, the terminal device being connected to one base station). The RAT restriction information may be used to indicate the restricted use of the terminal device for at least one type of sensing network. The RAT restriction information may include a bitmap, and each bit position in the bitmap corresponds to one type of sensing network, a bit value carried by the bit position indicates restricted use of the terminal device for a type of sensing network corresponding to the bit position. In a case that the bit value carried by the bit position is a first value, the bit value indicates that the type of sensing network corresponding to the bit position is restricted for the terminal device. In a case that the bit value carried by the bit position is a second value, the bit value indicates that the type of sensing network corresponding to the bit position is not restricted for the terminal device.

In an embodiment of the present disclosure, a correspondence between bit positions in the bitmap and receptive types of sensing network may be included in the RAT restriction information. The above RAT restriction information may also include the number of bit positions in the bitmap.

For example, in an embodiment of the present disclosure, it is assumed that the number of bit positions in the bitmap included in the RAT restriction information is 6, and the correspondence between bit positions and types of sensing network is that: a first bit position corresponds to a sensing network type 1, a second bit position corresponds to a sensing network type 2, a third bit position corresponds to a sensing network type 3, a fourth bit position corresponds to a sensing network type 4, a fifth bit position corresponds to other sensing network types, and a sixth bit position is a reserved bit for future use. Moreover, when the bit value carried by the bit position is 1, it indicates that the corresponding type of sensing network is restricted for the terminal device; when the bit value carried by the bit position is 0, it indicates that the corresponding type of sensing network is not restricted for the terminal device. Based on this, when the bitmap is 01100×, it means that the sensing network type 2 and the sensing network type 3 are restricted for the terminal device, and the sensing network type 1, the sensing network type 4, and other sensing network types are not restricted for the terminal device.

Furthermore, it should be noted that, in an embodiment of the present disclosure, the above RAT restriction information may be included in a mobility restriction list IE (information element). In addition to the RAT restriction information, the IE also includes other content. The above statement "the RAT restriction information may be used to indicate the restricted use of the terminal device for at least one type of sensing network" may be specifically understood as that: on the basis of the existing content included in the RAT restriction information, it is added to indicate the restricted use of the terminal device for the at least one type of sensing network. Based on this, Table 1 is a schematic structural table of a mobility restriction list IE including the RAT restriction information provided by an embodiment of the present disclosure.

**Table 1**

| **IE/Group Name** | **Presence** | **Range** | **IE type and reference** | **Semantics description** | **Criticality** | **Assigned Criticality** | |
|---|---|---|---|---|---|---|---|
| Serving PLMN | M | | PLMN Identity 9.3.3.5 | | - | | |
| Equivalent PLMNs (Public Lands Mobile Network) | | *0..*< *maximum number of Equivalent PLMNs>* | | Allowed PLMNs in addition to Serving PLMN. | - | | |
| | | | | This list corresponds to the list of "equivalent PLMNs" as defined in TS 24.501 [26]. This list is part of the roaming restriction information. | | | |
| | | | | Roaming restrictions apply to PLMNs other than the Serving PLMN and Equivalent PLMNs. | | | |
| >PLMN Identity | M | | 9.3.3.5 | | - | | |
| **RAT Restrictions** | | *0..*< *maximum number of allowed PLMNs>* | | This IE contains RAT restriction related information as specified in TS 23.501 [9]. | - | | |
| >PLMN Identity | M | | 9.3.3.5 | | - | | |
| | >RAT Restriction Information | M | | BITMAP { e-UTRA (0), nR (1), nR-unlicensed (2), nR-LEO (3), nR-MEO (4), nR-GEO (5), nR-OTHERSAT (6), Sensing network type 1 (7), Sensing network type 2 (8), Sensing network type 3 (9), Sensing network type 4 (10), Other Sensing network type (11)} (SIZE(13, ...)) | Each position in the bitmap represents a network type. | - | |
| | | | | | If a bit is set to "1", the respective RAT is restricted for the UE. | | |
| | | | | | If a bit is set to "0", the respective RAT is not restricted for the UE. | | |
| | | | | | Bit 7 reserved for future use. | | |
| | >Extended RAT Restriction Information | O | | 9.3.1.126 | If this IE is included, the *RAT Restriction Information* IE is ignored. | YES | ignore |
| **Forbidden Area Information** | | | *0..*< *maximum number of allowed PLMNs>* | | This IE contains Forbidden Area information as specified in TS 23.501 [9]. | - | |
| >PLMN Identity | | M | | 9.3.3.5 | | - | |
| **>Forbidden TACs (Tracking Area Code)** | | | *1..*< *maximum number of Forbidden TACs>* | | | - | |
| >>TAC | | M | | 9.3.3.10 | The TAC of the forbidden TAI (Tracking Area Identity). | - | |
| **Service Area Information** | | | *0..*< *maximum number of allowed PLMNs >* | | This IE contains Service Area Restriction information as specified in TS 23.501 [9]. | - | |
| >PLMN Identity | | M | | 9.3.3.5 | | - | |
| **>Allowed TACs** | | | *0..*< *maximum number of allowed or not allowed tracking areas>* | | | - | |
| >>TAC | | M | | 9.3.3.10 | The TAC of the allowed TAI. | - | |
| | **>Not Allowed TACs** | | *0..*< *maximum number of allowed or not allowed tracking areas>* | | | - | |
| >>TAC | | M | | 9.3.3.10 | The TAC of the notallowed TAI. | - | |
| Last E-UTRAN PLMN Identity | | O | | PLMN Identity 9.3.3.5 | Indicates the E-UTRAN PLMN ID from where the UE formerly handed over to 5GS and which is preferred in case of subsequent mobility to EPS. | YES | ignore |
| Core Network Type Restriction for Serving PLMN | | O | | ENUMERATED (EPC Forbidden,...) | Indicates whether the UE is restricted to connect to EPC for the Serving PLMN as specified in TS 23.501 [9]. | YES | ignore |
| **Core Network Type Restriction for Equivalent PLMNs** | | | *0..*< *maximum number of Equivalent PLMNs>* | | | YES | ignore |
| >PLMN Identity | | M | | 9.3.3.5 | Includes any of the Equivalent PLMNs listed in the *Mobility Restriction List* IE for which CN Type restriction applies as specified in TS 23.501 [9]. | - | |
| | >Core Network Type Restriction | M | | ENUMERATED (EPC Forbidden, 5GC Forbidden,...) | Indicates whether the UE is restricted to connect to EPC or to 5GC for this PLMN. | | |
| NPN (Non-Public Network) Mobility Information | | O | | 9.3.1.184 | | YES | reject |

As shown in Table 1 above, the seventh row of the mobility restriction list IE includes RAT restriction information. The "IE Type and Reference" column corresponding to the RAT restriction information includes a bitmap with 13 bit positions. The first 12 bit positions correspond to different types of networks, and the 13th bit is reserved. Referring to Table 1, it can be seen that in addition to the existing bit positions corresponding to different types of communication networks, the bit positions in the bitmap also include bit positions corresponding to different types of sensing networks. The correspondence between bit positions in the bitmap and network types is: {e-UTRA(0), nR(1), nR-unlicensed(2), nR LEO(3), nR MEO(4), nR GEO(5), nR OTHERSAT(6), sensing network type 1(7), sensing network type 2(8), sensing network type 3(9), sensing network type 4(10), other sensing network types(11) }, that is, the e-UTRA (evolved UMTS terrestrial radio access network) corresponds to the 0th bit position of the bitmap, the nR (new radio) corresponds to the first bit position of the bit string, the nR-unlicensed (new radiounlicensed) corresponds to the second bit position of the bit string, the nR LEO (new radio-low earth orbit) corresponds the third bit position of the bit string, the nR MEO (new radio-medium earth orbit) corresponds to the fourth bit position of the bit string, the nR GEO (new radiogeostationary orbit) corresponds to the fifth bit position in the bit string, the nR OTHERSAT (new radio-other satellites) corresponds to the sixth bit position in the bit string, and the sensing network type 1 corresponds to the seventh bit position in the bitmap. bits, the sensing network type 2 corresponds to the eighth bit position in the bitmap, the sensing network type 3 corresponds to the ninth bit position in the bitmap, the sensing network type 4 corresponds to the tenth bit position in the bitmap, the other sensing network types correspond to the eleventh bit position in the bitmap. In addition, the "semantic description" column corresponding to the RAT restriction information includes the different values of each bit position of the bitmap specifically indicating the restricted use of the terminal device for the network type corresponding to the bit position. As shown in Table 1, each bit represents one network type. If a bit value carried by one bit is set as "1", it indicates that the corresponding network type is restricted for the terminal device. If a bit value carried by one bit is set as "0", it indicates that the corresponding network type is not restricted for the terminal device.

Based on this, the base station may determine the RAT restriction information corresponding to the terminal device by querying the above Table 1.

In an embodiment of the present disclosure, the RAT information includes at least one type of sensing network that is not restricted for the terminal device. For example, in an embodiment of the present disclosure, the RAT information may include a sensing network type 1, a sensing network type 2, a sensing network type 3, a sensing network type 4, other sensing network types. It represents that the sensing network type 1, the sensing network type 2, the sensing network type 3, the sensing network type 4, other sensing network types are not restricted for the terminal device. It should be noted that the above RAT information is mainly RAT information related to TACs (tracking area codes). A detailed introduction to this part may refer to the description of the existing arts.

Furthermore, in an embodiment of the present disclosure, the above RAT restriction information may be included in the mobility restriction list IE. The above statement "the RAT information includes at least one type of sensing network that is not restricted for the terminal device" may specifically be understood as: on the basis of the existing content included in the RAT information, adding at least one type of sensing network that is not restricted for the terminal device. Based on this, Table 2 is a schematic structural table of a mobility restriction list IE including the RAT information provided by an embodiment of the present disclosure.

**Table 2**

| **IE/Group Name** | **Presence** | **Range** | **IE type and reference** | **Semantics description** |
|---|---|---|---|---|
| RAT Information | M | | ENUMERATED (unlicensed, nb-loT, ..., nR-LEO, nR-MEO, nR-GEO, nR-OTHERSAT , Sensing network type 1, Sensing network type 2, Sensing network type 3, Sensing network type 4, Other Sensing network type) | |

As described in Table 2 above, the first row of the mobility restriction list IE includes the RAT information. The "IE type and reference" column corresponding to the RAT information includes enumerated different types of networks that are not restricted for the terminal device. Referring to Table 2, it can be seen that the enumerated networks that are not restricted for the terminal device include different types of sensing networks in addition to the different types of communication networks already included. The enumerated different types of networks that are not restricted for the terminal device include: {unlicensed, nb-IoT, ..., nR-LEO, nR-MEO, nR-GEO, nR-OTHERSAT, sensing network type 1, sensing network type 2, sensing network type 3, sensing network type 4, other sensing network type}, that is, the terminal device is not restricted to use the above enumerated networks.

Based on this, the base station may determine the RAT information corresponding to the terminal device by querying the above Table 2.

Furthermore, in an embodiment of the present disclosure, the above extended RAT restriction information is applied to a dual connectivity scenario of the terminal device. The extended RAT restriction information may include a primary RAT restriction, the primary RAT restriction may include a bitmap, and each bit position in the bitmap corresponds to one type of sensing network, a bit value carried by the bit position indicates restricted use for a type of sensing network corresponding to the bit position. In a case that the bit value carried by the bit position is a first value, the bit value indicates that the type of sensing network corresponding to the bit position is restricted for the terminal device. In a case that the bit value carried by the bit position is a second value, the bit value indicates that the type of sensing network corresponding to the bit position is not restricted for the terminal device.

In an embodiment of the present disclosure, the primary RAT restriction in the above extended RAT restriction information has the same structure as the above RAT restriction information. A detailed introduction to the primary RAT restriction may refer to relevant introduction to the above RAT restriction information, which will not be repeated herein.

Further, it should be noted that in an embodiment of the present disclosure, the above extended RAT restriction information may be included in the mobility restriction list IE, which includes other contents in addition to the primary RAT restriction. The above statement "the primary RAT restriction may be used to indicate the restricted use of the terminal device for at least one type of sensing network" may be specifically understood as that: on the basis of the existing content included in the primary RAT restriction, it is added to indicate the restricted use of the terminal device for the at least one type of sensing network. Based on this, Table 3 is a schematic structural table of a mobility restriction list IE including the extended RAT restriction information provided by an embodiment of the present disclosure.

**Table 3**

| **IE/Group Name** | **Presence** | **Range** | **IE type and reference** | **Semantics description** |
|---|---|---|---|---|
| Primary RAT Restriction | M | | BIT MAP { e-UTRA (0), nR (1), nR-unlicensed (2), nR-LEO (3), nR-MEO (4), nR-GEO (5), nR-OTHERSAT (6), Sensing network type 1 (7), Sensing network type 2 (8), Sensing network type 3 (9), Sensing network type 4 (10), Other Sensing network type (11)} (SIZE(13, ...)) | Each position in the bitmap represents a Primary RAT. |
| | | | | If a bit is set to "1", the respective network is restricted for the UE. |
| | | | | If a bit is set to "0", the respective network is not restricted for the terminal. |
| | | | | Bit 7 reserved for future use. |
| | | | | The Primary RAT is the network used in the access cell, or target cell. |
| Secondary RAT Restriction | M | | BIT MAP { e-UTRA (0), nR (1), e-UTRA-unlicensed (2), nR-unlicensed (3)} (SIZE(8, ...)) | Each position in the bitmap represents a Secondary network. |
| | | | | If a bit is set to "1", the respective network is restricted for the UE. |
| | | | | If a bit is set to "0", the respective network is not restricted for the UE. |
| | | | | Bits 4-7 reserved for future use. |
| | | | | A Secondary network is a network, distinct from the UE's primary network, used in any cell serving the UE excluding the PCell. |

As shown in Table 3 above, the first row of the mobility restriction list IE includes the primary RAT restriction. The "IE type and reference" column corresponding to the primary RAT restriction includes a bitmap with 13 bit positions. The first 12 bit positions correspond to different types of networks, and the 13th bit is reserved. In addition, the "semantic description" column corresponding to the primary RAT restriction includes the different values of each bit position of the bitmap specifically indicating the restricted use of the terminal device for the network type corresponding to the bit position. As shown in Table 3, each bit represents one network type. If a bit value carried by one bit is set as "1", it indicates that the corresponding network type is restricted for the terminal device. If the bit value carried by one bit is set as "0", it indicates that the corresponding network type is not restricted for the terminal device. And referring to Table 3, it can be seen that the primary RAT restriction has the same structure as the RAT restriction information in Table 1 above. The primary RAT restriction is also used in the same way as the RAT restriction information in Table 1 above. A detailed introduction to the primary RAT restriction may refer to relevant introduction of the above RAT restriction information, which will not be repeated in this embodiment.

In addition, it should be noted that in an embodiment of the present disclosure, the primary RAT in Table 3 above is specifically the RAT used in the access cell or the target cell.

It can be understood that each element in Table 1, Table 2, and Table 3 exists independently. These elements are listed in the same table for example, but it does not mean that all elements in the table must be existed simultaneously based on the content of the table. The value of each element does not depend on the value of any other element in Table 1, Table 2, and Table 3. Therefore, those skilled in the art can understand that the value of each element in Table 1, Table 2, and Table 3 is an independent embodiment.

To sum up, in the method for determining restriction information provided by an embodiment of the present disclosure, the base station may receive the restriction information corresponding to the terminal device sent by the core network device, in which, the restriction information indicates the restricted use of the terminal device for the at least one type of sensing network. In the method of the present disclosure, with adding the restricted use of the terminal device for the at least one type of sensing network to the restriction information, the core network may support access of the sensing network. In addition, after receiving the restriction information, the base station may perform a mobility operation on the terminal device based on the restriction information, that is, determine whether the terminal device can access or hand over to the sensing network to enjoy a sensing service based on the restriction information. It can be seen that the present disclosure provides a method for realizing access of the sensing network to the core network and access of the terminal device to the sensing network. Based on this, the terminal device may access to the sensing network by using the method of the present disclosure. Moreover, the terminal device may also access to a communication network, and since the core network may support the access of the sensing network, the two networks may successfully interact through the core network, thus ensuring effective integration of the sensing network and the communication network.

FIG. 3 is a flowchart of a method for determining restriction information provided by an embodiment of the disclosure. The method is performed by a base station. As illustrated in FIG. 3, the method may include a following step.

At step 301, restriction information corresponding to a terminal device sent by a core network device is received through an initial context setup request message.

In an embodiment of the present disclosure, the initial context setup request message may be INITIAL CONTEXT SETUP REQUEST. After receiving the restriction information sent by the core network device through the initial context setup request message, the base station may store the received restriction information in the context of the terminal device.

Detailed introduction to the restriction information may refer to the relevant introduction in the above embodiments, which will not be repeated in an embodiment of this disclosure.

To sum up, in the method for determining restriction information provided by an embodiment of the present disclosure, the base station may receive the restriction information corresponding to the terminal device sent by the core network device, in which, the restriction information indicates the restricted use of the terminal device for the at least one type of sensing network. In the method of the present disclosure, with adding the restricted use of the terminal device for the at least one type of sensing network to the restriction information, the core network may support access of the sensing network. In addition, after receiving the restriction information, the base station may perform a mobility operation on the terminal device based on the restriction information, that is, determine whether the terminal device can access or hand over to the sensing network to enjoy a sensing service based on the restriction information. It can be seen that the present disclosure provides a method for realizing access of the sensing network to the core network and access of the terminal device to the sensing network. Based on this, the terminal device may access to the sensing network by using the method of the present disclosure. Moreover, the terminal device may also access to a communication network, and since the core network may support the access of the sensing network, the two networks may successfully interact through the core network, thus ensuring effective integration of the sensing network and the communication network.

FIG. 4 is a flowchart of a method for determining restriction information provided by an embodiment of the disclosure. The method is performed by a base station. As illustrated in FIG. 4, the method may include a following step.

At step 401, restriction information corresponding to a terminal device sent by a core network device is received through a handover request message.

In an embodiment of the present disclosure, the handover request message may be HANDOVER REQUEST. After receiving the restriction information sent by the core network device through the handover request message, the base station may store the received restriction information in the context of the terminal device.

Detailed introduction to the restriction information may refer to the relevant introduction in the above embodiments, which will not be repeated in an embodiment of this disclosure.

To sum up, in the method for determining restriction information provided by an embodiment of the present disclosure, the base station may receive the restriction information corresponding to the terminal device sent by the core network device, in which, the restriction information indicates the restricted use of the terminal device for the at least one type of sensing network. In the method of the present disclosure, with adding the restricted use of the terminal device for the at least one type of sensing network to the restriction information, the core network may support access of the sensing network. In addition, after receiving the restriction information, the base station may perform a mobility operation on the terminal device based on the restriction information, that is, determine whether the terminal device can access or hand over to the sensing network to enjoy a sensing service based on the restriction information. It can be seen that the present disclosure provides a method for realizing access of the sensing network to the core network and access of the terminal device to the sensing network. Based on this, the terminal device may access to the sensing network by using the method of the present disclosure. Moreover, the terminal device may also access to a communication network, and since the core network may support the access of the sensing network, the two networks may successfully interact through the core network, thus ensuring effective integration of the sensing network and the communication network.

FIG. 5 is a flowchart of a method for determining restriction information provided by an embodiment of the disclosure. The method is performed by a base station. As illustrated in FIG. 5, the method may include a following step.

At step 501, restriction information corresponding to a terminal device sent by a core network device is received through a downlink non-access stratum (NAS) transmission message.

In an embodiment of the present disclosure, the downlink NAS transmission message may be DOWNLINK NAS TRANSPORT. After receiving the restriction information sent by the core network device through the downlink NAS transmission message, the base station may cover mobility restriction information previously stored in context information of the terminal device by using the restriction information.

Detailed introduction to the restriction information may refer to the relevant introduction in the above embodiments, which will not be repeated in an embodiment of this disclosure.

To sum up, in the method for determining restriction information provided by an embodiment of the present disclosure, the base station may receive the restriction information corresponding to the terminal device sent by the core network device, in which, the restriction information indicates the restricted use of the terminal device for the at least one type of sensing network. In the method of the present disclosure, with adding the restricted use of the terminal device for the at least one type of sensing network to the restriction information, the core network may support access of the sensing network. In addition, after receiving the restriction information, the base station may perform a mobility operation on the terminal device based on the restriction information, that is, determine whether the terminal device can access or hand over to the sensing network to enjoy a sensing service based on the restriction information. It can be seen that the present disclosure provides a method for realizing access of the sensing network to the core network and access of the terminal device to the sensing network. Based on this, the terminal device may access to the sensing network by using the method of the present disclosure. Moreover, the terminal device may also access to a communication network, and since the core network may support the access of the sensing network, the two networks may successfully interact through the core network, thus ensuring effective integration of the sensing network and the communication network.

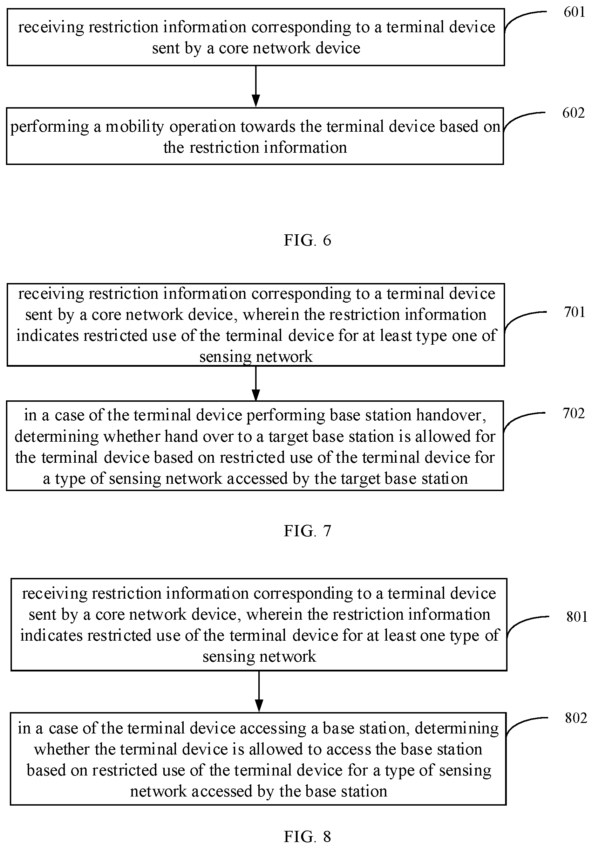

FIG. 6 is a flowchart of a method for determining restriction information provided by an embodiment of the disclosure. The method is performed by a base station. As illustrated in FIG. 6, the method may include a following step.

At step 601, restriction information corresponding to a terminal device sent by a core network device is received.

Detailed introduction to step 601 may refer to relevant introduction in the above embodiments, which will not be repeated in an embodiment of this disclosure.

At step 602, performing a mobility operation towards the terminal device based on the restriction information.

In an embodiment of the present disclosure, the mobility operation may include at least one of:
in a case of the terminal device performing base station handover, determining whether hand over to a target base station is allowed for the terminal device based on restricted use of the terminal device for a type of sensing network accessed by the target base station;
in a case of the terminal device accessing a base station, determining whether the terminal device is allowed to access the base station based on restricted use of the terminal device for a type of sensing network accessed by the base station;
during a dual connectivity operation, selecting a secondary cell group (SCG) applicable for the terminal device based on the restriction information, in which a type of sensing network accessed by a base station corresponding to the SCG applicable for the terminal device is not restricted for the terminal device; or
assigning a radio access network notification area (RNA) applicable for the terminal device to the terminal device, in which a type of sensing network accessed by a base station corresponding to the RNA applicable for the terminal device is not restricted for the terminal device.

In an embodiment of the present disclosure, how the base station performs different mobility operations on the terminal device based on the restriction information will be described in detail in subsequent embodiments.

To sum up, in the method for determining restriction information provided by an embodiment of the present disclosure, the base station may receive the restriction information corresponding to the terminal device sent by the core network device, in which, the restriction information indicates the restricted use of the terminal device for the at least one type of sensing network. In the method of the present disclosure, with adding the restricted use of the terminal device for the at least one type of sensing network to the restriction information, the core network may support access of the sensing network. In addition, after receiving the restriction information, the base station may perform a mobility operation on the terminal device based on the restriction information, that is, determine whether the terminal device can access or hand over to the sensing network to enjoy a sensing service based on the restriction information. It can be seen that the present disclosure provides a method for realizing access of the sensing network to the core network and access of the terminal device to the sensing network. Based on this, the terminal device may access to the sensing network by using the method of the present disclosure. Moreover, the terminal device may also access to a communication network, and since the core network may support the access of the sensing network, the two networks may successfully interact through the core network, thus ensuring effective integration of the sensing network and the communication network.

FIG. 7 is a flowchart of a method for determining restriction information provided by an embodiment of the disclosure. The method is performed by a base station. As illustrated in FIG. 7, the method may include a following step.

At step 701, restriction information corresponding to a terminal device sent by a core network device is received, in which, the restriction information indicates restricted use of the terminal device for at least one type of sensing network.

Detailed introduction to step 701 may refer to relevant introduction in the above embodiments, which will not be repeated in an embodiment of this disclosure.

At step 702, in a case of the terminal device performing base station handover, it is determined whether hand over to a target base station is allowed for the terminal device based on restricted use of the terminal device for a type of sensing network accessed by the target base station.

In an embodiment of the present disclosure, the method for the base station to determine whether handover of the terminal device to the target base station is allowed based on the restricted use of the terminal device for the type of sensing network accessed by the target base station in a case of the terminal device performing the base station handover may include: determining a target type of the sensing network accessed by the target base station, determining the restricted use of the terminal device for the target type of sensing network based on the restriction information corresponding to the terminal device. In response to determining that the restricted use of the terminal device for the target type of sensing network is: restricted for the terminal device, it is determined that the terminal device is not allowed to hand over to the target base station. In response to determining that the restricted use of the terminal device for the target type of sensing network is: not restricted for the terminal device, it is determined that the terminal device is allowed to hand over to the target base station.

To sum up, in the method for determining restriction information provided by an embodiment of the present disclosure, the base station may receive the restriction information corresponding to the terminal device sent by the core network device, in which, the restriction information indicates the restricted use of the terminal device for the at least one type of sensing network. In the method of the present disclosure, with adding the restricted use of the terminal device for the at least one type of sensing network to the restriction information, the core network may support access of the sensing network. In addition, after receiving the restriction information, the base station may perform a mobility operation on the terminal device based on the restriction information, that is, determine whether the terminal device can access or hand over to the sensing network to enjoy a sensing service based on the restriction information. It can be seen that the present disclosure provides a method for realizing access of the sensing network to the core network and access of the terminal device to the sensing network. Based on this, the terminal device may access to the sensing network by using the method of the present disclosure. Moreover, the terminal device may also access to a communication network, and since the core network may support the access of the sensing network, the two networks may successfully interact through the core network, thus ensuring effective integration of the sensing network and the communication network.

FIG. 8 is a flowchart of a method for determining restriction information provided by an embodiment of the disclosure. The method is performed by a base station. As illustrated in FIG. 8, the method may include a following step.

At step 801, restriction information corresponding to a terminal device sent by a core network device is received, in which, the restriction information indicates restricted use of the terminal device for at least one type of sensing network.

Detailed introduction to step 801 may refer to relevant introduction in the above embodiments, which will not be repeated in an embodiment of this disclosure.

At step 802, in a case of the terminal device accessing a base station, it is determined whether the terminal device is allowed to access the base station based on restricted use of the terminal device for a type of sensing network accessed by the base station.

In an embodiment of the present disclosure, the method for determining whether the terminal device is allowed to access the base station based on the restricted use of the terminal device for the type of sensing network accessed by the base station in a case of the terminal device accessing a base station may include: determining a target type of the sensing network accessed by the base station to be accessed by the terminal device, determining the restricted use of the terminal device for the target type of sensing network based on the restriction information corresponding to the terminal device. In response to determining that the restricted use of the terminal device for the target type of sensing network is: restricted for the terminal device, it is determined that the terminal device is not allowed to access the base station. In response to determining that the restricted use of the terminal device for the target type of sensing network is: not restricted for the terminal device, it is determined that the terminal device is allowed to access the base station.

To sum up, in the method for determining restriction information provided by an embodiment of the present disclosure, the base station may receive the restriction information corresponding to the terminal device sent by the core network device, in which, the restriction information indicates the restricted use of the terminal device for the at least one type of sensing network. In the method of the present disclosure, with adding the restricted use of the terminal device for the at least one type of sensing network to the restriction information, the core network may support access of the sensing network. In addition, after receiving the restriction information, the base station may perform a mobility operation on the terminal device based on the restriction information, that is, determine whether the terminal device can access or hand over to the sensing network to enjoy a sensing service based on the restriction information. It can be seen that the present disclosure provides a method for realizing access of the sensing network to the core network and access of the terminal device to the sensing network. Based on this, the terminal device may access to the sensing network by using the method of the present disclosure. Moreover, the terminal device may also access to a communication network, and since the core network may support the access of the sensing network, the two networks may successfully interact through the core network, thus ensuring effective integration of the sensing network and the communication network.

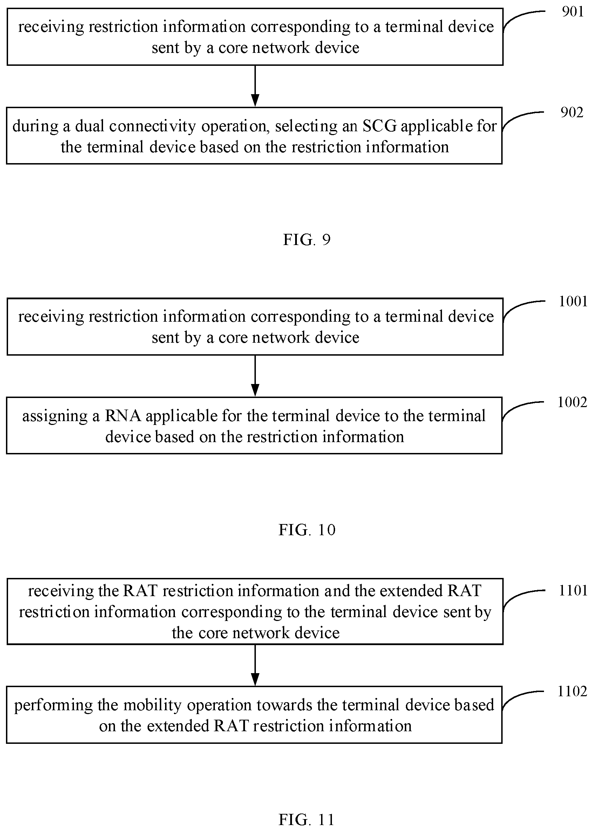

FIG. 9 is a flowchart of a method for determining restriction information provided by an embodiment of the disclosure. The method is performed by a base station. As illustrated in FIG. 9, the method may include a following step.

At step 901, restriction information corresponding to a terminal device sent by a core network device is received.

Detailed introduction to step 901 may refer to relevant introduction in the above embodiments, which will not be repeated in an embodiment of this disclosure.

At step 902, during a dual connectivity operation, an SCG applicable for the terminal device is selected based on the restriction information.

In an embodiment of the present disclosure, the type of sensing network accessed by a base station corresponding to the SCG applicable for the terminal device is not restricted for the terminal device.

Specifically, in an embodiment of the present disclosure, the base station may determine the type of sensing network that is not restricted for the terminal device based on the restriction information corresponding to the terminal device, and then, the base station may determine an SCG corresponding to a base station with a type of sensing network accessed being the type of sensing network not restricted for the terminal device as the SCG applicable for the terminal device.

To sum up, in the method for determining restriction information provided by an embodiment of the present disclosure, the base station may receive the restriction information corresponding to the terminal device sent by the core network device, in which, the restriction information indicates the restricted use of the terminal device for the at least one type of sensing network. In the method of the present disclosure, with adding the restricted use of the terminal device for the at least one type of sensing network to the restriction information, the core network may support access of the sensing network. In addition, after receiving the restriction information, the base station may perform a mobility operation on the terminal device based on the restriction information, that is, determine whether the terminal device can access or hand over to the sensing network to enjoy a sensing service based on the restriction information. It can be seen that the present disclosure provides a method for realizing access of the sensing network to the core network and access of the terminal device to the sensing network. Based on this, the terminal device may access to the sensing network by using the method of the present disclosure. Moreover, the terminal device may also access to a communication network, and since the core network may support the access of the sensing network, the two networks may successfully interact through the core network, thus ensuring effective integration of the sensing network and the communication network.

FIG. 10 is a flowchart of a method for determining restriction information provided by an embodiment of the disclosure. The method is performed by a base station. As illustrated in FIG. 10, the method may include a following step.

At step 1001, restriction information corresponding to a terminal device sent by a core network device is received.

Detailed introduction to step 1001 may refer to relevant introduction in the above embodiments, which will not be repeated in an embodiment of this disclosure.

At step 1002, an RNA applicable for the terminal device is assigned to the terminal device based on the restriction information.

In an embodiment of the present disclosure, the type of sensing network accessed by a base station corresponding to the RNA applicable for the terminal device is not restricted for the terminal device.

Specifically, in an embodiment of the present disclosure, the base station may determine the type of sensing network that is not restricted for the terminal device based on the restriction information corresponding to the terminal device, and then, the base station may determine an RNA corresponding to a base station with a type of sensing network accessed being the type of sensing network not restricted for the terminal device as the RNA applicable for the terminal device.

To sum up, in the method for determining restriction information provided by an embodiment of the present disclosure, the base station may receive the restriction information corresponding to the terminal device sent by the core network device, in which, the restriction information indicates the restricted use of the terminal device for the at least one type of sensing network. In the method of the present disclosure, with adding the restricted use of the terminal device for the at least one type of sensing network to the restriction information, the core network may support access of the sensing network. In addition, after receiving the restriction information, the base station may perform a mobility operation on the terminal device based on the restriction information, that is, determine whether the terminal device can access or hand over to the sensing network to enjoy a sensing service based on the restriction information. It can be seen that the present disclosure provides a method for realizing access of the sensing network to the core network and access of the terminal device to the sensing network. Based on this, the terminal device may access to the sensing network by using the method of the present disclosure. Moreover, the terminal device may also access to a communication network, and since the core network may support the access of the sensing network, the two networks may successfully interact through the core network, thus ensuring effective integration of the sensing network and the communication network.

FIG. 11 is a flowchart of a method for determining restriction information provided by an embodiment of the disclosure. The method is performed by a base station. As illustrated in FIG. 11, the method may include a following step.

At step 1101, RAT restriction information and extended RAT restriction information corresponding to a terminal device sent by a core network device is received.

Detailed introduction to the RAT restriction information and the extended RAT restriction information may refer to the relevant introduction in the above embodiments, which will not be repeated in an embodiment of this disclosure.

At step 1102, the mobility operation towards the terminal device is performed based on the extended RAT restriction information.

Referring to the above Table 1, the eighth row of the mobility restriction list IE includes the extended RAT restriction information. As can be seen from the contents of the "IE type and reference" column corresponding to the extended RAT restriction information that, when both the RAT restriction information and the extended RAT restriction information are included, the RAT restriction information is ignored. Based on this, when the base station simultaneously receives the RAT restriction information and the extended RAT restriction information corresponding to the terminal device sent by the core network device, the base station directly performs the mobility operation towards the terminal device based on the extended RAT restriction information.

To sum up, in the method for determining restriction information provided by an embodiment of the present disclosure, the base station may receive the restriction information corresponding to the terminal device sent by the core network device, in which, the restriction information indicates the restricted use of the terminal device for the at least one type of sensing network. In the method of the present disclosure, with adding the restricted use of the terminal device for the at least one type of sensing network to the restriction information, the core network may support access of the sensing network. In addition, after receiving the restriction information, the base station may perform a mobility operation on the terminal device based on the restriction information, that is, determine whether the terminal device can access or hand over to the sensing network to enjoy a sensing service based on the restriction information. It can be seen that the present disclosure provides a method for realizing access of the sensing network to the core network and access of the terminal device to the sensing network. Based on this, the terminal device may access to the sensing network by using the method of the present disclosure. Moreover, the terminal device may also access to a communication network, and since the core network may support the access of the sensing network, the two networks may successfully interact through the core network, thus ensuring effective integration of the sensing network and the communication network.

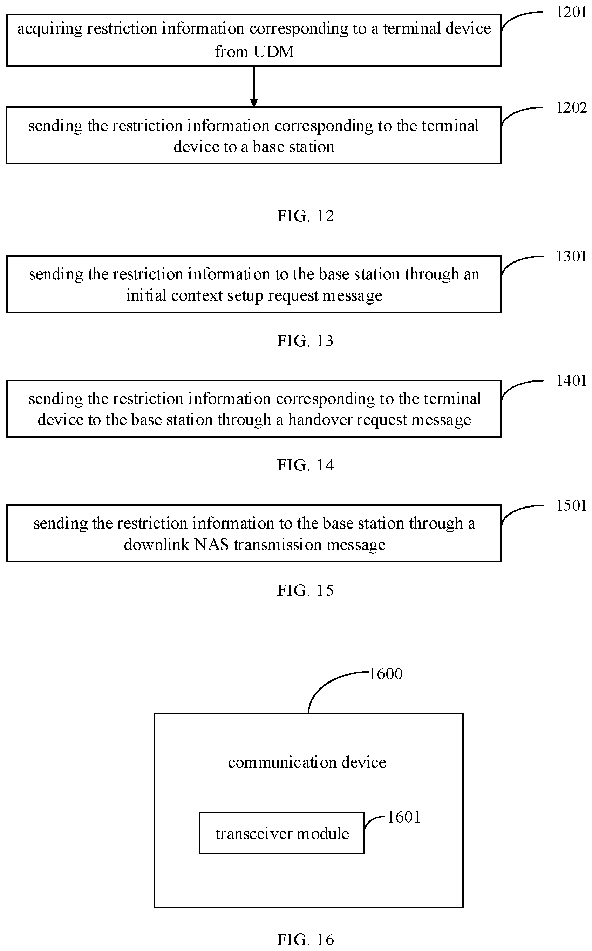

FIG. 12 is a flowchart of a method for determining restriction information provided by an embodiment of the disclosure. The method is performed by a core network device. As illustrated in FIG. 12, the method may include following steps.

At step 1201, restriction information corresponding to a terminal device is acquired from unified data management (UDM).

In an embodiment of the present disclosure, the core network device may send a Nudm_SDM_get request to the UDM based on an identity of the terminal device to obtain from the UDM a Nudm_SDM_get response that includes the RAT restriction information associated with the terminal device.

In an embodiment of the present disclosure, the restriction information indicates restricted use of the terminal device for at least one type of sensing network.

In an embodiment of the present disclosure, the restriction information includes at least one of:
radio access type (RAT) restriction information;
RAT information; or
extended RAT restriction information.

Further, in an embodiment of the present disclosure, the RAT restriction information is applied to a single connectivity scenario of the terminal device;
the RAT restriction information includes a bitmap, and each bit position in the bitmap corresponds to one type of sensing network, a bit value carried by the bit position indicates restricted use of the terminal device for a type of sensing network corresponding to the bit position.

In an embodiment of the present disclosure, in a case that the bit value carried by the bit position is a first value, the bit value indicates that the type of sensing network corresponding to the bit position is restricted for the terminal device.

In another embodiment of the present disclosure, in a case that the bit value carried by the bit position is a second value, the bit value indicates that the type of sensing network corresponding to the bit position is not restricted for the terminal device.

In an embodiment of the present disclosure, the RAT information includes at least one type of sensing network that is not restricted for the terminal device.

Further, in an embodiment of the present disclosure, the extended RAT restriction information is applied to a dual connectivity scenario of the terminal device;
the extended RAT restriction information includes a primary RAT restriction, the primary RAT restriction includes a bitmap, and each bit position in the bitmap corresponds to one type of sensing network, a bit value carried by the bit position indicates restricted use of the terminal device for a type of sensing network corresponding to the bit position.

In an embodiment of the present disclosure, in a case that the bit value carried by the bit position is a first value, the bit value indicates that the type of sensing network corresponding to the bit position is restricted for the terminal device.

In another embodiment of the present disclosure, in a case that the bit value carried by the bit position is a second value, the bit value indicates that the type of sensing network corresponding to the bit position is not restricted for the terminal device.

At step 1202, the restriction information corresponding to the terminal device is sent to a base station.

In an embodiment of the present disclosure, sending the restriction information corresponding to the terminal device to the base station includes at least one of:
sending the restriction information corresponding to the terminal device to the base station through an initial context setup request message;
sending the restriction information corresponding to the terminal device to the base station through a handover request message; or
sending the restriction information corresponding to the terminal device to the base station through a downlink non-access stratum (NAS) transmission message.

In an embodiment of the present disclosure, after receiving the restriction information corresponding to the terminal device sent by the core network device, the base station may perform the mobility operation towards the terminal device based on the restriction information.

In an embodiment of the present disclosure, for other detailed introductions in this embodiment, reference may be made to the relevant introductions in the above embodiments, which will be repeated in this embodiment.

To sum up, in the method for determining restriction information provided by an embodiment of the present disclosure, the core network device acquires the restriction information corresponding to the terminal device from the UDM, in which, the restriction information indicates the restricted use of the terminal device for the at least one type of sensing network, and sends the restriction information corresponding to the terminal device to the base station. In the method of the present disclosure, with adding the restricted use of the terminal device for the at least one type of sensing network to the restriction information, the core network may support access of the sensing network. In addition, after receiving the restriction information, the base station may perform a mobility operation towards the terminal device based on the restriction information, that is, determine whether the terminal device can access or hand over to the sensing network to enjoy a sensing service based on the restriction information. It can be seen that the present disclosure provides a method for realizing access of the sensing network to the core network and access of the terminal device to the sensing network. Based on this, the terminal device may access to the sensing network by using the method of the present disclosure. Moreover, the terminal device may also access to a communication network, and since the core network may support the access of the sensing network, the two networks may successfully interact through the core network, thus ensuring effective integration of the sensing network and the communication network.

FIG. 13 is a flowchart of a method for determining restriction information provided by an embodiment of the disclosure. The method is performed by a core network device. As illustrated in FIG. 13, the method may include following steps.

At step 1301, the restriction information is sent to the base station through an initial context setup request message.

For other detailed introductions in this embodiment, reference may be made to the relevant introductions in the above embodiments, which will be repeated in this embodiment.

To sum up, in the method for determining restriction information provided by an embodiment of the present disclosure, the core network device acquires the restriction information corresponding to the terminal device from the UDM, in which, the restriction information indicates the restricted use of the terminal device for the at least one type of sensing network, and sends the restriction information corresponding to the terminal device to the base station. In the method of the present disclosure, with adding the restricted use of the terminal device for the at least one type of sensing network to the restriction information, the core network may support access of the sensing network. In addition, after receiving the restriction information, the base station may perform a mobility operation towards the terminal device based on the restriction information, that is, determine whether the terminal device can access or hand over to the sensing network to enjoy a sensing service based on the restriction information. It can be seen that the present disclosure provides a method for realizing access of the sensing network to the core network and access of the terminal device to the sensing network. Based on this, the terminal device may access to the sensing network by using the method of the present disclosure. Moreover, the terminal device may also access to a communication network, and since the core network may support the access of the sensing network, the two networks may successfully interact through the core network, thus ensuring effective integration of the sensing network and the communication network.

FIG. 14 is a flowchart of a method for determining restriction information provided by an embodiment of the disclosure. The method is performed by a core network device. As illustrated in FIG. 14, the method may include following steps.

At step 1401, the restriction information corresponding to the terminal device is sent to the base station through a handover request message.

For other detailed introductions in this embodiment, reference may be made to the relevant introductions in the above embodiments, which will be repeated in this embodiment.

To sum up, in the method for determining restriction information provided by an embodiment of the present disclosure, the core network device acquires the restriction information corresponding to the terminal device from the UDM, in which, the restriction information indicates the restricted use of the terminal device for the at least one type of sensing network, and sends the restriction information corresponding to the terminal device to the base station. In the method of the present disclosure, with adding the restricted use of the terminal device for the at least one type of sensing network to the restriction information, the core network may support access of the sensing network. In addition, after receiving the restriction information, the base station may perform a mobility operation towards the terminal device based on the restriction information, that is, determine whether the terminal device can access or hand over to the sensing network to enjoy a sensing service based on the restriction information. It can be seen that the present disclosure provides a method for realizing access of the sensing network to the core network and access of the terminal device to the sensing network. Based on this, the terminal device may access to the sensing network by using the method of the present disclosure. Moreover, the terminal device may also access to a communication network, and since the core network may support the access of the sensing network, the two networks may successfully interact through the core network, thus ensuring effective integration of the sensing network and the communication network.

FIG. 15 is a flowchart of a method for determining restriction information provided by an embodiment of the disclosure. The method is performed by a core network device. As illustrated in FIG. 15, the method may include following steps.

At step 1501, the restriction information is sent to the base station through a downlink non-access stratum (NAS) transmission message.

For other detailed introductions in this embodiment, reference may be made to the relevant introductions in the above embodiments, which will be repeated in this embodiment.

To sum up, in the method for determining restriction information provided by an embodiment of the present disclosure, the core network device acquires the restriction information corresponding to the terminal device from the UDM, in which, the restriction information indicates the restricted use of the terminal device for the at least one type of sensing network, and sends the restriction information corresponding to the terminal device to the base station. In the method of the present disclosure, with adding the restricted use of the terminal device for the at least one type of sensing network to the restriction information, the core network may support access of the sensing network. In addition, after receiving the restriction information, the base station may perform a mobility operation towards the terminal device based on the restriction information, that is, determine whether the terminal device can access or hand over to the sensing network to enjoy a sensing service based on the restriction information. It can be seen that the present disclosure provides a method for realizing access of the sensing network to the core network and access of the terminal device to the sensing network. Based on this, the terminal device may access to the sensing network by using the method of the present disclosure. Moreover, the terminal device may also access to a communication network, and since the core network may support the access of the sensing network, the two networks may successfully interact through the core network, thus ensuring effective integration of the sensing network and the communication network.

FIG. 16 is a structural diagram of a communication device provided by an embodiment of the disclosure. As illustrated in FIG. 16, the communication device includes a transceiver module 1601.

The transceiver module 1601 is configured to receive restriction information corresponding to a terminal device sent by a core network device, in which the restriction information indicates restricted use of the terminal device for at least one type of sensing network.

To sum up, in the method for determining restriction information provided by an embodiment of the present disclosure, the base station may receive the restriction information corresponding to the terminal device sent by the core network device, in which, the restriction information indicates the restricted use of the terminal device for the at least one type of sensing network. In the method of the present disclosure, with adding the restricted use of the terminal device for the at least one type of sensing network to the restriction information, the core network may support access of the sensing network. In addition, after receiving the restriction information, the base station may perform a mobility operation on the terminal device based on the restriction information, that is, determine whether the terminal device can access or hand over to the sensing network to enjoy a sensing service based on the restriction information. It can be seen that the present disclosure provides a method for realizing access of the sensing network to the core network and access of the terminal device to the sensing network. Based on this, the terminal device may access to the sensing network by using the method of the present disclosure. Moreover, the terminal device may also access to a communication network, and since the core network may support the access of the sensing network, the two networks may successfully interact through the core network, thus ensuring effective integration of the sensing network and the communication network.

Optionally, in an embodiment of the present disclosure, the restriction information includes at least one of:
radio access type (RAT) restriction information;
RAT information; or
extended RAT restriction information.

Optionally, in an embodiment of the present disclosure, the RAT restriction information is applied to a single connectivity scenario of the terminal device;
the RAT restriction information includes a bitmap, and each bit position in the bitmap corresponds to one type of sensing network, a bit value carried by the bit position indicates restricted use of the terminal device for a type of sensing network corresponding to the bit position;
in which, in a case that the bit value carried by the bit position is a first value, the bit value indicates that the type of sensing network corresponding to the bit position is restricted for the terminal device;
in a case that the bit value carried by the bit position is a second value, the bit value indicates that the type of sensing network corresponding to the bit position is not restricted for the terminal device.

Optionally, in an embodiment of the present disclosure, the RAT information includes at least one type of sensing network that is not restricted for the terminal device.

Optionally, in an embodiment of the present disclosure, the extended RAT restriction information is applied to a dual connectivity scenario of the terminal device;
the extended RAT restriction information includes a primary RAT restriction, the primary RAT restriction includes a bitmap, and each bit position in the bitmap corresponds to one type of sensing network, a bit value carried by the bit position indicates restricted use of the terminal device for a type of sensing network corresponding to the bit position;
in which, in a case that the bit value carried by the bit position is a first value, the bit value indicates that the type of sensing network corresponding to the bit position is restricted for the terminal device;
in a case that the bit value carried by the bit position is a second value, the bit value indicates that the type of sensing network corresponding to the bit position is not restricted for the terminal device.

Optionally, in an embodiment of the present disclosure, the transceiver module 1601 is further configured to:
receive the restriction information corresponding to the terminal device sent by the core network device through an initial context setup request message.

Optionally, in an embodiment of the present disclosure, the transceiver module 1601 is further configured to:
receive the restriction information corresponding to the terminal device sent by the core network device through a handover request message.

Optionally, in an embodiment of the present disclosure, the transceiver module 1601 is further configured to:
receive the restriction information corresponding to the terminal device sent by the core network device through a downlink non-access stratum (NAS) transmission message.

Optionally, in an embodiment of the present disclosure, the device is further configured to:
perform a mobility operation towards the terminal device based on the restriction information.

Optionally, in an embodiment of the present disclosure, in response to the restriction information including the RAT restriction information and the extended RAT restriction information, the device is further configured to: perform the mobility operation towards the terminal device based on the extended RAT restriction information.

Optionally, in an embodiment of the present disclosure, the mobility operation includes at least one of:
in a case of the terminal device performing base station handover, determining whether hand over to a target base station is allowed for the terminal device based on restricted use of the terminal device for a type of sensing network accessed by the target base station;
in a case of the terminal device accessing a base station, determining whether the terminal device is allowed to access the base station based on restricted use of the terminal device for a type of sensing network accessed by the base station;
during a dual connectivity operation, selecting a secondary cell group (SCG) applicable for the terminal device based on the restriction information, in which, a type of sensing network accessed by a base station corresponding to the SCG applicable for the terminal device is not restricted for the terminal device; or
assigning a radio access network notification area (RNA) applicable for the terminal device to the terminal device, in which a type of sensing network accessed by a base station corresponding to the RNA applicable for the terminal device is not restricted for the terminal device.

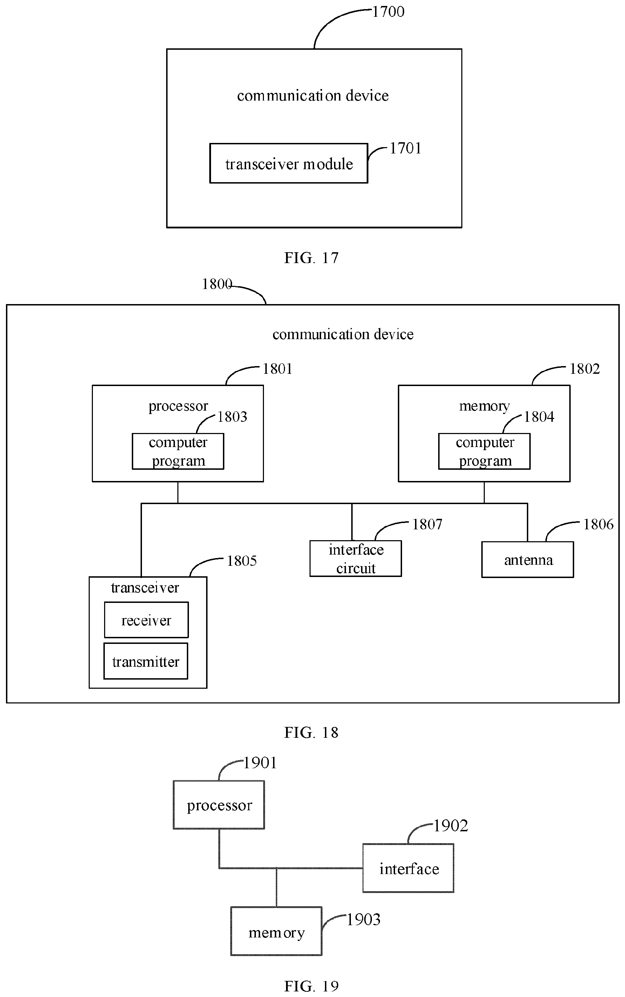

FIG. 17 is a structural diagram of a communication device provided by another embodiment of the disclosure. As illustrated in FIG. 17, the communication device may include a transceiver module 1701.

The transceiver module 1701 is configured to acquire restriction information corresponding to a terminal device from unified data management (UDM), in which the restriction information indicates restricted use of the terminal device for at least one type of sensing network.

The transceiver module 1701 is further configured to send the restriction information corresponding to the terminal device to a base station.

To sum up, in the method for determining restriction information provided by an embodiment of the present disclosure, the core network device acquires the restriction information corresponding to the terminal device from the UDM, in which, the restriction information indicates the restricted use of the terminal device for the at least one type of sensing network, and sends the restriction information corresponding to the terminal device to the base station. In the method of the present disclosure, with adding the restricted use of the terminal device for the at least one type of sensing network to the restriction information, the core network may support access of the sensing network. In addition, after receiving the restriction information, the base station may perform a mobility operation towards the terminal device based on the restriction information, that is, determine whether the terminal device can access or hand over to the sensing network to enjoy a sensing service based on the restriction information. It can be seen that the present disclosure provides a method for realizing access of the sensing network to the core network and access of the terminal device to the sensing network. Based on this, the terminal device may access to the sensing network by using the method of the present disclosure. Moreover, the terminal device may also access to a communication network, and since the core net work may support the access of the sensing network, the two networks may successfully interact through the core network, thus ensuring effective integration of the sensing network and the communication network.

Optionally, in an embodiment of the present disclosure, the restriction information includes at least one of:
radio access type (RAT) restriction information;
RAT information; or
extended RAT restriction information.

Optionally, in an embodiment of the present disclosure, the RAT restriction information is applied to a single connectivity scenario of the terminal device;
the RAT restriction information includes a bitmap, and each bit position in the bitmap corresponds to one type of sensing network, a bit value carried by the bit position indicates restricted use of the terminal device for a type of sensing network corresponding to the bit position;
in which, in a case that the bit value carried by the bit position is a first value, the bit value indicates that the type of sensing network corresponding to the bit position is restricted for the terminal device;
in a case that the bit value carried by the bit position is a second value, the bit value indicates that the type of sensing network corresponding to the bit position is not restricted for the terminal device.

Optionally, in an embodiment of the present disclosure, the RAT information includes at least one type of sensing network that is not restricted for the terminal device.

Optionally, in an embodiment of the present disclosure, the extended RAT restriction information is applied to a dual connectivity scenario of the terminal device;
the extended RAT restriction information includes a primary RAT restriction, the primary RAT restriction includes a bitmap, and each bit position in the bitmap corresponds to one type of sensing network, a bit value carried by the bit position indicates restricted use of the terminal device for a type of sensing network corresponding to the bit position;
in which, in a case that the bit value carried by the bit position is a first value, the bit value indicates that the type of sensing network corresponding to the bit position is restricted for the terminal device;
in a case that the bit value carried by the bit position is a second value, the bit value indicates that the type of sensing network corresponding to the bit position is not restricted for the terminal device.

Optionally, in an embodiment of the present disclosure, the transceiver module 1701 is further configured to:
send the restriction information corresponding to the terminal device to the base station through an initial context setup request message.

Optionally, in an embodiment of the present disclosure, the transceiver module 1701 is further configured to:
send the restriction information corresponding to the terminal device to the base station through a handover request message.

Optionally, in an embodiment of the present disclosure, the transceiver module 1701 is further configured to:
send the restriction information corresponding to the terminal device to the base station through a downlink non-access stratum (NAS) transmission message.

FIG. 18 is a structural diagram of a communication device 1800 provided by an embodiment of the disclosure. The communication device 1800 may be a network device or a terminal device, or may be a chip, a chip system or a processor that supports the network device to realize the above-described methods, or may be a chip, a chip system or a processor that supports the terminal device to realize the above-described methods. The communication device may be used to realize the methods described in the above method embodiments with reference to the description of the above-described method embodiments.

The communication device 1800 may include one or more processors 1801. The processor 1801 may be a general purpose processor or a dedicated processor, such as, a baseband processor and a central processor. The baseband processor is used for processing communication protocols and communication data. The central processor is used for controlling the communication device (e.g., a base station, a baseband chip, a terminal device, a terminal device chip, a DU, or a CU), executing computer programs, and processing data of the computer programs.

Optionally, the communication device 1800 may include one or more memories 1802 on which computer programs 1804 may be stored. The processor 1801 executes the computer programs 1804 to cause the communication device 1800 to perform the methods described in the above method embodiments. Optionally, the memory 1802 may also store data. The communication device 1800 and the memory 1802 may be provided separately or may be integrated together.

Optionally, the communication device 1800 may also include a transceiver 1805 and an antenna 1806. The transceiver 1805 may be referred to as a transceiver unit, a transceiver machine, or a transceiver circuit, for realizing a transceiver function. The transceiver 1805 may include a receiver and a transmitter. The receiver may be referred to as a receiving machine or a receiving circuit, for realizing the receiving function. The transmitter may be referred to as a transmitter machine or a transmitting circuit, for realizing the transmitting function.

Optionally, the communication device 1800 may also include one or more interface circuits 1807. The interface circuits 1807 are used to receive code instructions and transmit them to the processor 1801. The processor 1801 runs the code instructions to cause the communication device 1800 to perform the method described in the method embodiments.

In a case where the communication device 1800 is a base station, the transceiver 1805 is used to perform step 201 in FIG. 2; step 301 in FIG. 3; step 401 in FIG. 4; step 501 in FIG. 5; step 601 and step 602 in FIG. 6; step 701 and step 702 in FIG. 7; step 801 and step 802 in FIG. 8; step 901 and step 902 in FIG. 9; step 1001 and step 1002 in FIG. 10; step 1101 and step 1102 in FIG. 11.

In a case where the communication device 1800 is a core network device, the transceiver 1805 performs step 1201 in FIG. 12, step 1301 in FIG. 13, step 1401 in FIG. 14, and step 1501 in FIG. 15.

In an implementation, the processor 1801 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 1801 may store a computer program 1803. The processor 1801 runs the computer program 1803 to cause the communication device 1800 to perform the methods described in the method embodiments above. The computer program 1803 may be solidified in the processor 1801, and in such case the processor 1801 may be implemented by hardware.

In an implementation, the communication device 1800 may include circuits. The circuits may implement the sending, receiving or communicating function in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver are produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a network device or a terminal device, but the scope of the communication device described in the disclosure is not limited thereto, and the structure of the communication device may not be limited by FIG. 18. The communication device may be a stand-alone device or may be part of a larger device. For example, the described communication device may be:
(1) a stand-alone integrated circuit (IC), a chip, a chip system or a subsystem;
(2) a set of ICs including one or more ICs, optionally, the set of ICs may also include storage components for storing data and a computer program;
(3) an ASIC, such as a modem;
(4) a module that can be embedded within other devices;
(5) a receiver, a terminal device, a smart terminal device, a cellular phone, a wireless device, a handheld machine, a mobile unit, an in-vehicle device, a network device, a cloud device, an artificial intelligence device, and the like; and
(6) others.

The case where the communication device is a chip or a chip system may be referred to FIG. 19. FIG. 19 is a structural diagram of a chip provided in an embodiment of the disclosure. The chip illustrated in FIG. 19 includes a processor 1901 and an interface 1902. There may be may be one or more processors 1901, and a plurality of interfaces 1902.

Optionally, the chip further includes a memory 1903, the memory 1903 is configured to store necessary computer programs and data.

It is understood by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understand that "first", "second", or other various numerical numbers involved in the disclosure are only described for the convenience of differentiation, and are not used to limit the scope of the embodiments of the disclosure, or used to indicate the order of precedence.

The term "at least one" in the disclosure may also be described as one or more, and the term "more" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that can be understood by the communication device, and the values or representations of the parameters may be other values or representations that can be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, pre-define, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A method for determining restriction information, performed by a base station, comprising:
receiving restriction information corresponding to a terminal device sent by a core network device, wherein the restriction information indicates restricted use of the terminal device for at least one type of sensing network.

2. The method according to claim 1, wherein the restriction information comprises at least one of:
radio access type (RAT) restriction information;
RAT information; or
extended RAT restriction information.

3. The method according to claim 2, wherein the RAT restriction information is applied to a single connectivity scenario of the terminal device; the RAT restriction information comprises a bitmap, and each bit position in the bitmap corresponds to one type of sensing network, a bit value carried by the bit position indicates restricted use of the terminal device for a type of sensing network corresponding to the bit position;
wherein, in a case that the bit value carried by the bit position is a first value, the bit value indicates that the type of sensing network corresponding to the bit position is restricted for the terminal device;
in a case that the bit value carried by the bit position is a second value, the bit value indicates that the type of sensing network corresponding to the bit position is not restricted for the terminal device.

4. The method according to claim 2, wherein the RAT information comprises at least one type of sensing network that is not restricted for the terminal device.

5. The method according to claim 2, wherein the extended RAT restriction information is applied to a dual connectivity scenario of the terminal device; the extended RAT restriction information comprises a primary RAT restriction, the primary RAT restriction comprises a bitmap, and each bit position in the bitmap corresponds to one type of sensing network, a bit value carried by the bit position indicates restricted use of the terminal device for a type of sensing network corresponding to the bit position;
wherein, in a case that the bit value carried by the bit position is a first value, the bit value indicates that the type of sensing network corresponding to the bit position is restricted for the terminal device;
in a case that the bit value carried by the bit position is a second value, the bit value indicates that the type of sensing network corresponding to the bit position is not restricted for the terminal device.

6. The method according to claim 1, wherein receiving the restriction information corresponding to the terminal device sent by the core network device comprises at least one of:
receiving the restriction information corresponding to the terminal device sent by the core network device through an initial context setup request message;
receiving the restriction information corresponding to the terminal device sent by the core network device through a handover request message; or
receiving the restriction information corresponding to the terminal device sent by the core network device through a downlink non-access stratum (NAS) transmission message.

7. The method according to claim 2, further comprising:
performing a mobility operation towards the terminal device based on the restriction information.

8. The method according to claim 7, wherein in response to the restriction information comprising the RAT restriction information and the extended RAT restriction information, performing the mobility operation towards the terminal device based on the restriction information comprises:
performing the mobility operation towards the terminal device based on the extended RAT restriction information.

9. The method of claim 7 or 8, wherein the mobility operation comprises at least one of:
in a case of the terminal device performing base station handover, determining whether hand over to a target base station is allowed for the terminal device based on restricted use of the terminal device for a type of sensing network accessed by the target base station;
in a case of the terminal device accessing a base station, determining whether the terminal device is allowed to access the base station based on restricted use of the terminal device for a type of sensing network accessed by the base station;
during a dual connectivity operation, selecting a secondary cell group (SCG) applicable for the terminal device based on the restriction information, wherein a type of sensing network accessed by a base station corresponding to the SCG applicable for the terminal device is not restricted for the terminal device; or
assigning a radio access network notification area (RNA) applicable for the terminal device to the terminal device, wherein a type of sensing network accessed by a base station corresponding to the RNA applicable for the terminal device is not restricted for the terminal device.

10. A method for determining restriction information, performed by a core network device, comprising:
acquiring restriction information corresponding to a terminal device from unified data management (UDM), wherein the restriction information indicates restricted use of the terminal device for at least one type of sensing network; and
sending the restriction information corresponding to the terminal device to a base station.

11. The method according to claim 10, wherein the restriction information comprises at least one of:
radio access type (RAT) restriction information;
RAT information; or
extended RAT restriction information.

12. The method according to claim 11, wherein the RAT restriction information is applied to a single connectivity scenario of the terminal device; the RAT restriction information comprises a bitmap, and each bit position in the bitmap corresponds to one type of sensing network, a bit value carried by the bit position indicates restricted use of the terminal device for a type of sensing network corresponding to the bit position;
wherein, in a case that the bit value carried by the bit position is a first value, the bit value indicates that the type of sensing network corresponding to the bit position is restricted for the terminal device;
in a case that the bit value carried by the bit position is a second value, the bit value indicates that the type of sensing network corresponding to the bit position is not restricted for the terminal device.

13. The method according to claim 11, wherein the RAT information comprises at least one type of sensing network that is not restricted for the terminal device.

14. The method according to claim 11, wherein the extended RAT restriction information is applied to a dual connectivity scenario of the terminal device; the extended RAT restriction information comprises a primary RAT restriction, the primary RAT restriction comprises a bitmap, and each bit position in the bitmap corresponds to one type of sensing network, a bit value carried by the bit position indicates restricted use of the terminal device for a type of sensing network corresponding to the bit position;
wherein, in a case that the bit value carried by the bit position is a first value, the bit value indicates that the type of sensing network corresponding to the bit position is restricted for the terminal device;
in a case that the bit value carried by the bit position is a second value, the bit value indicates that the type of sensing network corresponding to the bit position is not restricted for the terminal device.

15. The method according to claim 10, wherein sending the restriction information corresponding to the terminal device to the base station comprises at least one of:
sending the restriction information corresponding to the terminal device to the base station through an initial context setup request message;
sending the restriction information corresponding to the terminal device to the base station through a handover request message; or
sending the restriction information corresponding to the terminal device to the base station through a downlink non-access stratum (NAS) transmission message.

16. A communication device, configured in a base station, comprising:
a transceiver module, configured to receive restriction information corresponding to a terminal device sent by a core network device, wherein the restriction information indicates restricted use of the terminal device for at least one type of sensing network.

17. A communication device, configured in a core network device, comprising:
a transceiver module, configured to acquire restriction information corresponding to a terminal device from unified data management (UDM), wherein the restriction information indicates restricted use of the terminal device for at least one type of sensing network; and
the transceiver module is further configured to send the restriction information corresponding to the terminal device to a base station.

18. A communication device, comprising a processor and a memory storing a computer program, wherein the processor is configured to perform the computer program stored on the memory, causing the device to perform the method according to any one of claims 1 to 9, or the processor is configured to perform the computer program stored on the memory, causing the device to perform the method according to any one of claims 10 to 15.

19. A communication device, comprising: a processor and an interface circuit, wherein
the interface circuit is configured to receive code instructions and transmit the code instructions to the processor; and
the processor is configured to run the code instructions to perform the method according to any one of claims 1 to 9, or to run the code instructions to perform the method according to any one of claims 10 to 15.

20. A computer-readable storage medium for storing instructions that, when executed, cause the method according to any one of claims 1 to 9 to be implemented, or when executed, cause the method according to any one of claims 10 to 15 to be implemented.
